# FASCICULE DE BREVET EUROPEEN

(11) **EP 0 911 932 B1**
(45) Date de publication et mention de la délivrance du brevet: **06.02.2002**
(21) Numéro de dépôt: 98402593.2
(22) Date de dépôt: 19.10.1998
(51) Int. Cl.: H02G 3/10

(54) **Adaptateur de montage pour appareil électrique à contour non carré**
Montageadapter für nichtquadratisch geformtes elektrisches Apparat
Mounting adapter for non square shaped electrical apparatus

(30) Priorité: 20.10.1997 FR 9713110
(43) Date de publication de la demande: 28.04.1999
(73) Titulaire: Planet Wattohm, 60300 Senlis (FR)
(72) Inventeur: Albert, Christophe, 60700 Pont Sainte Maxence (FR); Thirouin, Stéphane, 75015 Paris (FR)
(74) Mandataire: CABINET BONNET-THIRION

(56) Documents cités:
- EP-A- 0 239 456
- EP-A- 0 633 639

## Description

L'invention se rapporte à un adaptateur de montage pour appareil électrique à contour non carré, notamment rectangulaire, permettant le montage de celui-ci en bordure d'une goulotte de câblage horizontal ou vertical.

On connaît des adaptateurs de montage d'un appareil électrique tel que prise de courant ou interrupteur ou analogue, susceptible de venir se monter à côté d'une goulotte électrique. L'adaptateur comporte notamment une coiffe latérale conformée pour recouvrir un tronçon de ladite goulotte. On enlève une partie du couvercle de cette goulotte à l'emplacement destiné à être recouvert par la coiffe, ce qui permet de faire passer des fils dans l'adaptateur de montage pour le raccordement de l'appareil électrique.

Classiquement, une goulotte électrique est installée horizontalement, notamment en bordure de plinthe ou de plafond, ou verticalement, notamment le long d'une porte ou à l'angle d'une paroi. Or, un appareil électrique tel qu'une prise de courant ou un interrupteur présente lui-même un sens de montage par rapport aux directions verticale et horizontale. Ceci pose un problème lorsque l'appareil électrique a un contour non carré, typiquement rectangulaire. Actuellement, le technicien doit utiliser deux adaptateurs différents ou préparer son adaptateur en y faisant des découpes ou en y ajoutant des composants, en fonction de la position de montage le long d'une goulotte horizontale ou verticale.

Des adaptateurs de montage du genre mentionné ci-dessus sont décrits dans les brevets EP-A-0 633 639 et EP-A-0 239 456.

L'invention permet de résoudre ce problème en proposant un adaptateur à deux configurations de montage.

Plus précisément, l'invention concerne un adaptateur de montage, pour appareil électrique à contour non carré, pour le montage de celui-ci en bordure d'une goulotte électrique horizontale ou verticale, du type comportant un socle muni de moyens permettant sa fixation à une paroi et un cadre extérieur conformé pour venir s'emboîter sur ledit socle, muni d'une coiffe latérale conformée pour recouvrir un tronçon de ladite goulotte, caractérisé en ce qu'il comporte en outre un cadre intérieur à contour carré conformé pour venir s'emboîter sur une bordure de forme correspondante du cadre extérieur dans l'une ou l'autre de deux positions possibles, comportant un logement ouvert à contour non carré correspondant à celui d'un appareil électrique précité et susceptible d'accueillir au moins une partie d'un tel appareil et en ce qu'il comporte en outre des moyens pour immobiliser ledit cadre intérieur dans l'une ou l'autre des deux positions possibles précitées par rapport audit cadre extérieur.

Selon une possibilité avantageuse, les moyens pour immobiliser le cadre intérieur dans l'une ou l'autre des positions précitées comprennent quatre éléments formant points d'ancrage disposés au fond du socle suivant une configuration de carré. Autrement dit, les quatre éléments formant points d'ancrage sont définis aux quatre coins d'un carré et s'étendent à partir d'une paroi du fond dudit socle. Au moins deux de ces éléments formant points d'ancrage, situés en diagonale dans ladite configuration de carré sont utilisables pour la fixation du cadre intérieur. Typiquement, deux points d'ancrage en diagonale sont utilisés pour la fixation du cadre intérieur dans une position de montage et les deux autres points d'ancrage en diagonale sont utilisés pour la fixation du cadre intérieur dans l'autre position de montage.

Selon un mode de réalisation simple, les quatre éléments formant points d'ancrage sont quatre colonnettes munies de trous de vis.

Avantageusement le cadre intérieur comporte une bordure de fond délimitant une ouverture non carrée (rectangulaire) pour le passage de la partie arrière de l'appareil électrique concerné. Cette bordure peut comporter au moins deux trous venant se positionner en regard des extrémités de deux colonnettes du socle, en diagonale dans ladite configuration de carré. Ces deux trous permettent une fixation par vis du cadre intérieur sur le socle, ledit cadre extérieur, portant ladite coiffe, étant simplement retenu emboîté entre le socle et le cadre intérieur.

Selon une autre caractéristique avantageuse, le socle comporte des moyens de fixation de l'appareil électrique. Ces moyens de fixation peuvent être des dents de clipsage permettant un montage très rapide de l'appareil.

La coiffe s'étend le long d'un côté du cadre extérieur et comporte deux découpes opposées définies respectivement dans des prolongements de deux côtés parallèles dudit cadre extérieur, tous deux perpendiculaires à la direction longitudinale de la coiffe. Ces découpes ont la forme et les dimensions du profil d'un premier type de goulotte. Avantageusement, le dispositif est muni de deux prolongements sécables venant partiellement obturer ces découpes pour définir des découpes réduites ayant la forme et les dimensions du profil d'un deuxième type de goulotte, plus petit. Ainsi, le même adaptateur peut venir se raccorder à deux modèles de goulotte de dimensions différentes.

Selon un mode de réalisation préféré, les deux prolongements sécables sont rattachés aux extrémités de deux côtés parallèles dudit socle tous deux perpendiculaires au côté du socle qui est parallèle à la direction longitudinale de la coiffe.

L'invention sera mieux comprise et d'autres avantages de celle-ci apparaîtront plus clairement à la lumière de la description qui va suivre d'un mode de réalisation actuellement préféré d'un adaptateur de montage conforme à son principe, donnée uniquement à titre d'exemple et faite en référence aux dessins annexés dans lesquels:

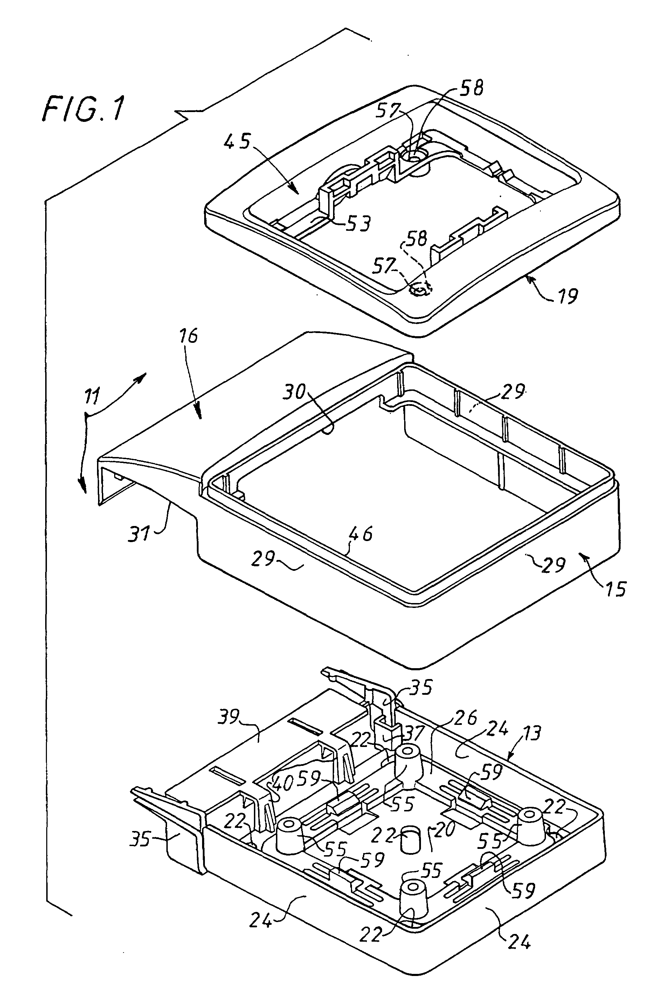

- la figure 1 est une vue en perspective éclatée des éléments constitutifs de l'adaptateur de montage conforme à l'invention;
- la figure 2 est une vue de détail et à plus grande échelle d'une partie latérale du socle;
- la figure 3 illustre l'installation de l'adaptateur de montage à côté d'une goulotte horizontale;
- la figure 4 illustre l'installation du même adaptateur à côté d'une goulotte verticale;
- la figure 5 illustre l'installation d'un interrupteur électrique sur le côté d'une goulotte de câblage verticale à l'aide de l'adaptateur de montage conforme à l'invention; et
- la figure 6 illustre l'installation d'une prise électrique le long d'une goulotte de câblage horizontale à l'aide du même adaptateur de montage.

En se reportant aux dessins, il apparaît que l'adaptateur de montage 11 conforme à l'invention se compose principalement d'un socle 13, d'un cadre dit "extérieur" 15 conformé pour venir s'emboîter sur le socle et muni d'une coiffe latérale 16 conformée pour recouvrir un tronçon d'une goulotte 17 et un cadre dit "intérieur" 19, à contour carré, conformé pour venir s'emboîter sur une bordure de forme correspondante (c'est-à-dire globalement carrée) du cadre extérieur. Le socle 13 comporte une paroi de fond 20 globalement carrée munie de moyens permettant sa fixation à une paroi, en l'occurrence ici de classiques trous oblongs 22. La paroi de fond est bordée extérieurement par trois côtés 24 en forme de bande faisant saillie perpendiculairement à son plan. Ceci définit en quelque sorte une sorte de boîte ouverte sur toute la longueur de l'un de ses côtés, pour permettre de faire passer des fils électriques entre une goulotte 17 et l'intérieur de l'adaptateur, ce dernier étant adossé par le côté ouvert le long d'une telle goulotte. A l'intérieur de la paroi de fond se trouve défini un cadre en relief 26, carré, qui porte des éléments de structure qui seront décrits plus loin.

Le cadre extérieur 15 est conformé pour venir s'emboîter sur le socle 13. Plus précisément, il comprend trois faces 29 perpendiculaires entre elles, définissant un contour intérieur sensiblement égal au contour extérieur des trois côtés 24 du socle; la quatrième face comporte une large échancrure 30, pour le passage des fils électriques et cette quatrième face se prolonge par la coiffe latérale 16 conformée pour recouvrir un tronçon d'une goulotte.

Plus précisément, cette coiffe 16 prolonge le cadre extérieur latéralement le long de l'un de ses côtés et, à chacune de ses extrémités suivant sa direction longitudinale, elle comporte deux découpes 31 opposées définies respectivement dans des prolongements de deux faces parallèles 29 du cadre extérieur, tous deux perpendiculaires à la direction longitudinale de la coiffe. Ces découpes 31 ont la forme et les dimensions du profil d'un premier type de goulotte. L'adaptateur comporte en outre deux prolongements sécables 35 venant partiellement obturer ces découpes pour définir des découpes réduites ayant la forme et les dimensions du profil d'un deuxième type de goulotte, plus petit.

Dans l'exemple, ces deux prolongements sécables 35 sont rattachés aux extrémités de deux côtés 24, parallèles, du socle 13 tous deux perpendiculaires au côté du socle qui est ouvert et parallèle à la direction longitudinale de la coiffe.

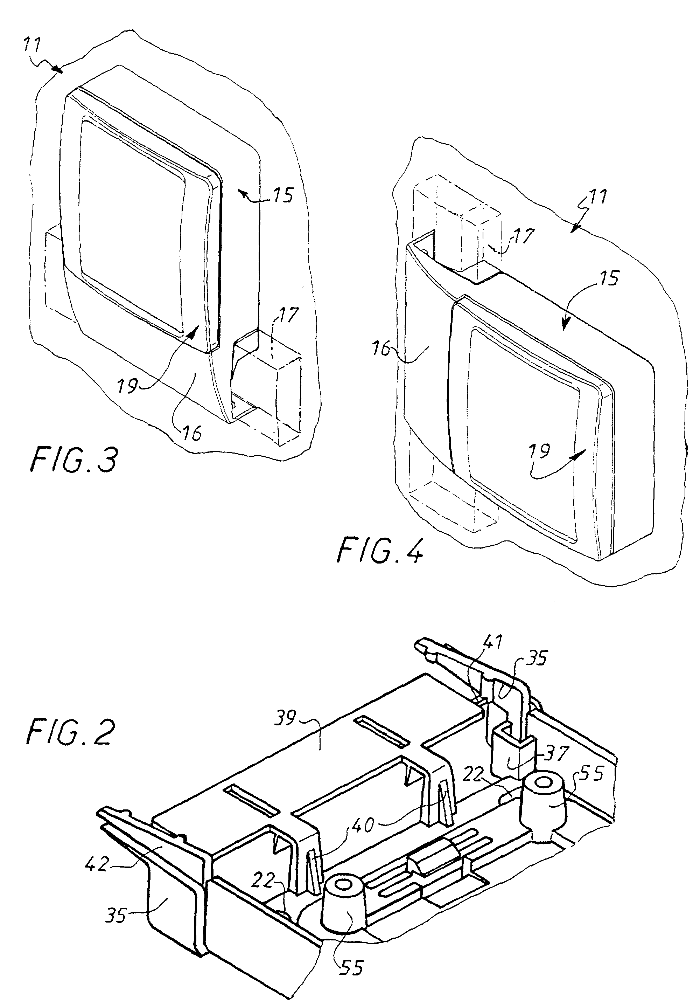

Sur la figure 2, on voit que ces prolongements sécables sont rattachés respectivement aux deux côtés 24 du socle par des pontets 37 à profil en U qui peuvent facilement être coupés au moyen d'une pince.

Par ailleurs, le même socle comporte une lamelle séparatrice 39, s'étendant parallèlement à sa paroi de fond au-dessous de l'emplacement de la coiffe 16 du cadre extérieur 15. Cette lamelle est reliée au socle par deux pattes en L 40. Ladite lamelle est également reliée par de fines languettes sécables 41 aux deux prolongements 35. Chacun de ceux-ci comporte une partie approximativement rectangulaire prolongée par une fine nervure, susceptible de venir obturer une partie de la découpe 31 définie à l'extrémité correspondante de la coiffe 16 et cette partie est surmontée d'une partie en retrait 42 venant s'encastrer sous la paroi d'extrémité de la coiffe.

Bien entendu, le socle, avec ses deux prolongements sécables et la lamelle séparatrice, est d'une seule pièce moulée. Il en est de même pour le cadre extérieur et la coiffe. Le cadre extérieur comporte en outre à l'opposé de son bord d'emboîtement avec le socle, une nervure d'emboîtement 46 carrée, en retrait par rapport aux faces latérales 29, permettant l'emboîtement du cadre intérieur à contour carré dont la face interne, non visible sur les dessins, comporte une creusure de forme adaptée correspondante.

Comme on le voit sur les figures 3 et 4, lorsque le cadre intérieur est emboîté sur le cadre extérieur, il se trouve dans le prolongement de la face extérieure de la coiffe 16.

Le cadre intérieur 19 comporte un logement ouvert 45 à contour non carré, en l'occurrence ici rectangulaire, de forme et dimensions correspondant à celui d'un appareil électrique. Ce logement est donc susceptible d'accueillir un tel appareil ou au moins une partie de celui-ci.

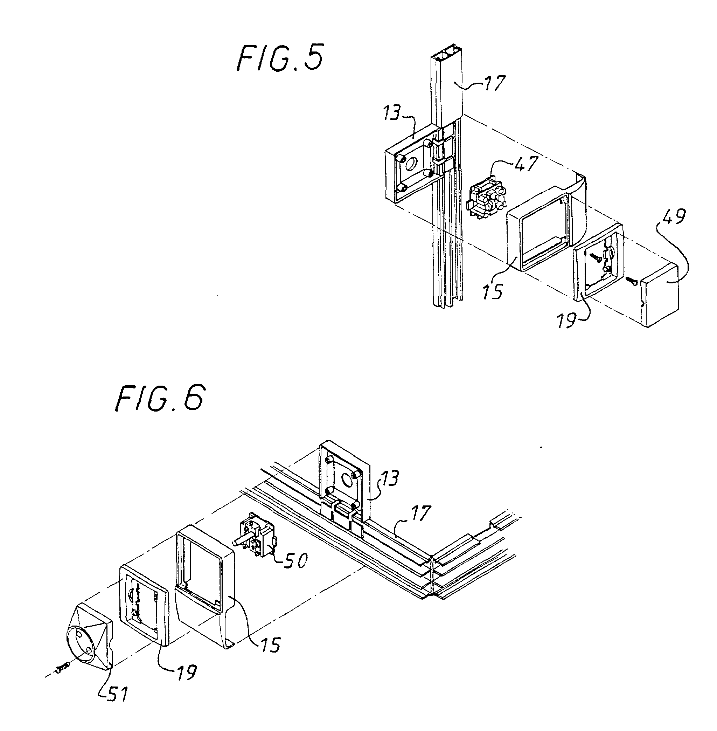

Comme le montre la figure 5, dans le cas d'un interrupteur, la partie électrique 47 de celui-ci comportant les contacts et les bornes de raccordement viendra plus particulièrement se loger dans l'espace défini entre le socle 13 et le cadre extérieur 15 tandis que le cadre intérieur 19 accueillera plus particulièrement un bouton d'actionnement plat 49 d'un tel interrupteur.

De même, dans le cas de la figure 6, le corps de prise électrique 50 comprenant les contacts et les bornes de raccordement se trouvera essentiellement logé dans l'espace compris entre le socle 13 de l'adaptateur et le cadre extérieur 15 tandis que le logement ouvert du cadre intérieur 19 accueillera plus particulièrement le capuchon 51 de la prise électrique.

Le cadre intérieur 19 comporte une bordure de fond 53 délimitant une ouverture non carrée (ici rectangulaire) pour le passage de la partie arrière d'un appareil électrique précité. Autrement dit, le fond du logement du cadre extérieur comporte une large ouverture rectangulaire permettant le montage de l'appareil électrique.

Il ressort clairement des dessins que le cadre intérieur 19 à contour carré est conformé pour venir s'emboîter sur la bordure correspondante du cadre extérieur 15 dans l'une ou l'autre de deux positions possibles correspondant respectivement aux configurations de montage des figures 5 et 6.

Avantageusement, l'adaptateur 11 comporte aussi des moyens pour immobiliser le cadre intérieur dans l'une ou l'autre des deux positions possibles précitées par rapport au cadre extérieur.

Dans l'exemple, ces moyens comprennent quatre éléments formant points d'ancrage, disposés au fond du socle 13 suivant une configuration de carré. Au moins deux de ces éléments formant points d'ancrage, situés en diagonale dans ladite configuration de carré seront utilisés pour la fixation du cadre intérieur, respectivement pour chaque position. Ici, les quatre éléments formant points d'ancrage sont quatre colonnettes 55 munies de trous de vis tandis que la bordure de fond 53 du cadre intérieur 19 comporte au moins deux trous 57 venant se positionner en regard de deux colonnettes 55 en diagonale dans ladite configuration de carré, pour l'une ou l'autre des deux positions précitées, respectivement. Cet agencement permet donc une fixation par vis du cadre intérieur sur le socle, le montage retenant le cadre extérieur entre le socle et le cadre intérieur. La bordure de fond 53 du cadre intérieur comporte des lamages 58 autour des trous 57.

Par ailleurs, le socle comporte des moyens de fixation de l'appareil électrique lui-même.

Dans l'exemple représenté, ces moyens de fixation sont des dents de clipsage 59. Le socle comporte quatre dents de clipsage disposées au milieu des quatre côtés de ladite configuration de carré. Un appareil électrique prévu pour ce type d'adaptateur vient se monter sur deux dents opposées situées le long de deux côtés parallèles du carré, pour l'une ou l'autre des deux positions précitées, respectivement.

Comme on peut le constater, les quatre colonnettes 55 sont venues de moulage et font saillie aux quatre coins du cadre 26 tandis que les dents de clipsage 59 sont définies aux milieux des côtés de ce même cadre.

La mise en oeuvre d'un tel adaptateur de montage est des plus simples et découle avec évidence de la description qui précède. On commence par fixer le socle 13 à la paroi, sur le côté de la goulotte horizontale ou verticale. Puis, on vient emboîter le cadre extérieur 15 sur ce socle et fixer, par clipsage, une partie de l'appareil électrique (figures 5 et 6).

Ensuite, il reste à positionner convenablement le cadre intérieur 19 sur le cadre extérieur et à fixer ledit cadre intérieur au socle 13, au moyen de deux vis. L'installation s'achève par la mise en place de la partie restante de l'appareil électrique dans le logement ouvert dudit cadre intérieur.

## Revendications

1. Adaptateur de montage, pour appareil électrique à contour non carré, pour le montage de celui-ci en bordure d'une goulotte de câblage horizontale ou verticale, du type comportant un socle (13) muni de moyens permettant sa fixation à une paroi et un cadre extérieur (15) conformé pour venir s'emboîter sur ledit socle, muni d'une coiffe latérale (16) conformée pour recouvrir un tronçon de ladite goulotte, **caractérisé en ce qu'**il comporte en outre un cadre intérieur (19) à contour carré conformé pour venir s'emboîter sur une bordure de forme correspondante du cadre extérieur dans l'une ou l'autre de deux positions possibles, comportant un logement ouvert (45) à contour non carré correspondant à celui d'un appareil électrique précité et susceptible d'accueillir au moins une partie d'un tel appareil et **en ce qu'**il comporte en outre des moyens pour immobiliser ledit cadre intérieur dans l'une ou l'autre des deux positions possibles précitées par rapport audit cadre extérieur.

2. Adaptateur selon la revendication 1, **caractérisé en ce que** les moyens pour immobiliser ledit cadre intérieur dans l'une ou l'autre des deux positions précitées comprennent quatre éléments formant points d'ancrage (55) disposés au fond dudit socle suivant une configuration de carré, au moins deux de ces éléments formant points d'ancrage, situés en diagonale dans ladite configuration de carré étant utilisables pour la fixation dudit cadre intérieur.

3. Adaptateur selon la revendication 2, **caractérisé en ce que** lesdits quatre éléments formant points d'ancrage sont quatre colonnettes (55) munies de trous de vis.

4. Adaptateur selon la revendication 3, **caractérisé en ce que** ledit cadre intérieur comporte une bordure de fond (53) délimitant une ouverture non carrée pour le passage d'un appareil électrique précité et **en ce que** cette bordure comporte au moins deux trous (57) venant se positionner en regard de deux colonnettes (55) en diagonale dans ladite configuration de carré pour l'une ou l'autre des deux positions précitées, respectivement, l'agencement permettant une fixation par vis du cadre intérieur sur ledit socle, ledit cadre extérieur étant retenu entre eux.

5. Adaptateur selon la revendication 4, **caractérisé en ce que** ladite bordure de fond (53) dudit cadre intérieur comporte des lamages (58) autour desdits trous.

6. Adaptateur selon l'une des revendications précédentes, **caractérisé en ce que** ledit socle (13) comporte des moyens de fixation d'un appareil électrique.

7. Adaptateur selon la revendication 6, **caractérisé en ce que** ces moyens de fixation sont des dents de clipsage (59).

8. Adaptateur selon la revendication 6 ou 7, **caractérisé en ce qu'**un cadre carré (26) étant défini au fond (20) dudit socle, lesdits moyens de fixation d'un appareil électrique comprennent quatre dents de clipsage (59) disposées aux milieux des côtés dudit cadre, un appareil électrique venant se monter sur deux dents opposées pour l'une ou l'autre des deux positions précitées possibles, respectivement.

9. Adaptateur selon l'une des revendications précédentes, **caractérisé en ce que** ladite coiffe comporte deux découpes (31) opposées, définies respectivement dans des prolongements de deux faces (29) parallèles dudit cadre extérieur, tous deux perpendiculaires à une direction longitudinale de la coiffe, lesdites découpes ayant la forme et les dimensions du profil d'un premier type de goulotte et **en ce qu'**il comporte deux prolongements sécables (35) venant partiellement obturer lesdites découpes pour définir des découpes réduites ayant la forme et les dimensions du profil d'un deuxième type de goulotte, plus petit.

10. Adaptateur selon la revendication 9, **caractérisé en ce que** les deux prolongements sécables (35) sont rattachés aux extrémités de deux côtés (24) parallèles dudit socle, tous deux perpendiculaires au côté dudit socle qui est parallèle à la direction longitudinale de ladite coiffe.

11. Adaptateur selon l'une des revendications précédentes, **caractérisé en ce que** ledit cadre extérieur (15) est ouvert latéralement du côté de ladite coiffe.

12. Adaptateur selon l'une des revendications précédentes, **caractérisé en ce que** ledit socle comporte une lamelle séparatrice (39) s'étendant au-dessous de l'emplacement de ladite coiffe dudit cadre extérieur.

13. Adaptateur selon l'une des revendications précédentes, **caractérisé en ce que** ledit logement ouvert (45) a un contour sensiblement rectangulaire.

14. Adaptateur selon l'une des revendications précédentes, **caractérisé en ce, que** lorsque ledit cadre intérieur (19) est emboîté sur ledit cadre extérieur, il se trouve dans le prolongement de la face extérieure de ladite coiffe latérale (16).

## Patentansprüche

1. Montageadapter für ein elektrisches Gerät mit nicht quadratischem Umriss zur Montage desselben am Rand eines horizontalen oder vertikalen Kabelkanals von der Art, die einen Sockel (13) umfasst, der mit Mitteln versehen ist, die seine Befestigung an einer Wand erlauben, und einen Außenrahmen (15) umfasst, der derart angepasst ist, dass er auf den Sockel gesetzt werden kann, und der mit einem seitlichen Deckel (16) versehen ist, der derart angepasst ist, dass er einen Abschnitt des Kanals bedeckt, **dadurch gekennzeichnet, dass** er außerdem einen Innenrahmen (19) mit einem quadratischen Umriss umfasst, der derart angepasst ist, dass er auf einen Rand des Außenrahmens mit einer entsprechenden Form in der einen oder der anderen von zwei möglichen Lagen gesetzt werden kann, und der eine offene Aufnahme (45) mit einem nicht quadratischen Umriss umfasst, der demjenigen eines oben genannten elektrischen Gerätes entspricht und imstande ist, mindestens einen Teil eines derartigen Gerätes aufzunehmen, und dass er außerdem Mittel umfasst, um den Innenrahmen in der einen oder der anderen der beiden oben genannten möglichen Lagen bezüglich des Außenrahmens festzulegen.

2. Adapter nach Anspruch 1, **dadurch gekennzeichnet, dass** die Mittel zum Festlegen des Innenrahmens in der einen oder der anderen der beiden oben genannten Lagen vier Elemente umfassen, die Verankerungspunkte (55) bilden und am unteren Teil dieses Sockels gemäß einer quadratischen Anordnung angeordnet sind, wobei mindestens zwei von diesen Elementen, die Verankerungspunkte bilden, diagonal in der quadratischen Anordnung liegen und zur Befestigung des Innenrahmens verwendbar sind.

3. Adapter nach Anspruch 2, **dadurch gekennzeichnet, dass** die genannten vier Elemente, die Verankerungspunkte bilden, vier mit Schraubenlöchern versehene Säulchen (55) sind.

4. Adapter nach Anspruch 3, **dadurch gekennzeichnet, dass** der genannte Innenrahmen einen unteren Rand (53) umfasst, der eine nicht quadratische Öffnung für den Hindurchtritt eines oben genannten elektrischen Gerätes begrenzt, und dass dieser Rand mindestens zwei Löcher (57) umfasst, die in Bezug auf zwei diagonal in der quadratischen Anordnung gegenüberliegende Säulchen (55) für jeweils die eine oder die andere der oben genannten beiden Lagen zu liegen kommen, wobei der Aufbau eine Befestigung des Innenrahmens durch Schrauben an dem Sockel erlaubt und der Außenrahmen zwischen beiden festgehalten ist.

5. Adapter nach Anspruch 4, **dadurch gekennzeichnet, dass** der untere Rand (53) des Innenrahmens Senkungen (58) um die Löcher herum umfasst.

6. Adapter nach einem der vorhergehenden Ansprüche, **dadurch gekennzeichnet, dass** der Sockel (13) Befestigungsmittel für ein elektrisches Gerät umfasst.

7. Adapter nach Anspruch 6, **dadurch gekennzeichnet, dass** die Befestigungsmittel Klipszähne (59) sind.

8. Adapter nach Anspruch 6 oder 7, **dadurch gekennzeichnet, dass** ein quadratischer Rahmen (26) am unteren Teil (20) des Sockels gebildet ist, wobei die Befestigungsmittel für ein elektrisches Gerät vier Klipszähne (59) umfassen, die in der Mitte der Seiten des Rahmens angeordnet sind, wobei ein elektrisches Gerät auf zwei gegenüberliegenden Zähnen für jeweils die eine oder die andere der beiden oben genannten möglichen Lagen montiert werden kann.

9. Adapter nach einem der vorhergehenden Ansprüche, **dadurch gekennzeichnet, dass** der Deckel zwei entgegengesetzte Ausschnitte (31) umfasst, die jeweils in Verlängerungen von zwei parallelen Flächen (29) des Außenrahmens gebildet sind, wobei alle beide senkrecht zu einer Längsrichtung des Deckels stehen, wobei die Ausschnitte die Form und die Abmessungen des Profils einer ersten Kanalart aufweisen, und dass er zwei abtrennbare Verlängerungen (35) umfasst, die die Ausschnitte teilweise füllen, um reduzierte Ausschnitte zu bilden, die die Form und die Abmessungen des Profils einer zweiten, kleineren Kabelkanalart aufweisen.

10. Adapter nach Anspruch 9, **dadurch gekennzeichnet, dass** die beiden abtrennbaren Verlängerungen (35) an den Enden von zwei parallelen Seiten (24) des Sockels angeschlossen sind, wobei alle beide senkrecht zu der Seite des Sockels stehen, die parallel zur Längsrichtung des Deckels liegt.

11. Adapter nach einem der vorhergehenden Ansprüche, **dadurch gekennzeichnet, dass** der Außenrahmen (15) seitlich auf der Seite des Deckels offen ist.

12. Adapter nach einem der vorhergehenden Ansprüche, **dadurch gekennzeichnet, dass** der Sockel ein Trennplättchen (39) umfasst, das sich unterhalb der Stelle des Deckels des Außenrahmens erstreckt.

13. Adapter nach einem der vorhergehenden Ansprüche, **dadurch gekennzeichnet, dass** die offene Aufnahme (45) einen etwa rechteckigen Umriss aufweist.

14. Adapter nach einem der vorhergehenden Ansprüche, **dadurch gekennzeichnet, dass** der Innenrahmen (19) die Verlängerung der Außenfläche des seitlichen Deckels (16) bildet, wenn er auf den Außenrahmen gesetzt ist.

## Claims

1. A mounting adaptor for an electrical apparatus of non-square contour for mounting same at the edge of a horizontal or vertical cabling duct, of the type comprising a base (13) provided with means permitting fixing thereof to a wall and an external frame (15) shaped to come into engagement on to said base, provided with a lateral cover portion (16) shaped to receive a portion of said duct, **characterised in that** it further comprises an internal frame (19) of square contour shaped to come into engagement on an edge of corresponding shape of the external frame in one or other of two possible positions, comprising an open housing (45) of non-square contour corresponding to that of a said electrical apparatus and capable of receiving at least a part of said apparatus and that it further comprises means for immobilising said internal frame in one or other of said two possible positions with respect to said external frame.

2. An adaptor according to claim 1 **characterised in that** the means for immobilising said internal frame in one or other of the said two positions comprise four elements forming anchorage points (55) disposed at the bottom of said base in a square configuration, at least two of said elements forming anchorage points disposed in diagonal relationship in said square configuration being capable of use for fixing said internal frame.

3. An adaptor according to claim 2 **characterised in that** said four elements forming anchorage points are four column portions (55) provided with screw holes.

4. An adaptor according to claim 3 **characterised in that** said internal frame comprises a bottom edge (53) delimiting a non-square opening for the passage of a said electrical apparatus and that said edge comprises at least two holes (57) which come into a position in opposite relationship to two column portions (55) in diagonal relationship in said square configuration for one or other of said two positions respectively, the arrangement permitting screw fixing of the internal frame to said base, said external frame being retained between them.

5. An adaptor according to claim 4 **characterised in that** said bottom edge (53) of said internal frame comprises facing portions (58) around said holes.

6. An adaptor according to one of the preceding claims **characterised in that** said base (13) comprises means for fixing an electrical apparatus.

7. An adaptor according to claim 6 **characterised in that** said fixing means are clipping teeth (59).

8. An adaptor according to claim 6 or claim 7 **characterised in that** a square frame (26) being defined at the bottom (20) of said base, said means for fixing an electrical apparatus comprise four clipping teeth (59) disposed at the middles of the sides of said frame, an electrical apparatus being mounted on two opposite teeth for one or other of said two possible positions respectively.

9. An adaptor according to one of the preceding claims **characterised in that** said cover portion comprises two opposite cut-outs (31) defined respectively in prolongations of two parallel faces (29) of said external frame, both being perpendicular to a longitudinal direction of the cover portion, said cut-outs being of the shape and dimensions of the profile of a first type of duct and that it comprises two prolongations (35) which can be cut and which partially close said cut-outs to define reduced cut-outs involving the shape and dimensions of the profile of a second smaller type of duct.

10. An adaptor according to claim 9 **characterised in that** the two prolongations (35) which can be cut are attached to the ends of two parallel sides (24) of said base, both perpendicular to the side of said base which is parallel to the longitudinal direction of said cover portion.

11. An adaptor according to one of the preceding claims **characterised in that** said external frame (15) is open laterally at the side of said cover portion.

12. An adaptor according to one of the preceding claims **characterised in that** said base comprises a separating plate portion (39) extending below the location of said cover portion of said external frame.

13. An adaptor according to one of the preceding claims **characterised in that** said open housing (45) is of a substantially rectangular contour.

14. An adaptor according to one of the preceding claims **characterised in that**, when said internal frame (19) is engaged on said external frame, it is disposed in line with the external face of said lateral cover portion (16).
